# EUROPÄISCHE PATENTSCHRIFT

(11) **EP 2 652 665 B1**
(45) Veröffentlichungstag und Bekanntmachung des Hinweises auf die Patenterteilung: **02.09.2015**
(21) Anmeldenummer: 11801979.3
(22) Anmeldetag: 09.12.2011
(51) Int. Cl.: G06F 21/72, G06F 11/07, G07F 7/08, G07F 7/10

(54) **PORTABLER DATENTRÄGER MIT FEHLBEDIENUNGSZÄHLER**
PORTABLE DATA STORAGE MEDIUM WITH CONTROL ERROR COUNTER
SUPPORT DE DONNÉES PORTATIF COMPORTANT UN COMPTEUR DES ERREURS DE COMMANDE

(30) Priorität: 14.12.2010 DE 102010054446
(43) Veröffentlichungstag der Anmeldung: 23.10.2013
(73) Patentinhaber: Giesecke & Devrient GmbH, 81677 München (DE)
(72) Erfinder: GIBIS, Oliver, 81825 München (DE)
(86) Internationale Anmeldenummer: PCT/EP2011/006228
(87) Internationale Veröffentlichungsnummer: WO 2012/079730

(56) Entgegenhaltungen:
- WO-A1-2008/084016
- CA-A1- 2 247 475
- DE-A1- 10 141 926

## Beschreibung

Die vorliegende Erfindung betrifft einen portablen Datenträger mit einem Fehlbedienungszähler sowie ein Verfahren zum Sichern eines Kommandos in dem Datenträger mittels eines Fehlbedienungszählers.

Fehlbedienungszähler werden im Zusammenhang mit portablen Datenträgern, beispielsweise Chipkarten, dazu eingesetzt, das unbefugte Durchführen sicherheitsrelevanter Kommandos mit dem Ziel der Erlangung sicherheitsrelevanter Daten des Datenträgers zu begrenzen. Dabei ist es beispielsweise bekannt, die Anzahl aufeinander folgender falscher Eingaben zu beschränken. Wird diese Anzahl überschritten, wird der Datenträger gesperrt. Mittels eines Fehlbedienungszählers können auch Angriffe anderer Art auf beliebige, auf dem Datenträger ausgeführte Kommandos erkannt werden. Wird beispielsweise eine durch ein Kommando ausgeführte Berechnung durch eine externe Einwirkung auf den Datenträger gestört mit dem Ziel, anhand des gestörten Ergebnisses an der Berechnung beteiligte geheime Daten auszuspähen, so kann dies datenträgerintern dadurch erkannt werden, dass die Berechnung, bevor ein Ergebnis ausgegeben wird, wiederholt wird. Die Ausgabe eines Berechnungsergebnisses erfolgt nur dann, wenn beide Berechnungen zu einem identischen Ergebnis kommen. Andernfalls kann von einem Angriff auf eine der Berechnungen ausgegangen werden und ein entsprechender Fehlbedienungszähler vermerkt diesen Angriff.

Ein Angreifer, welcher einen vorstehend beschriebenen Angriff auf ein Kommando eines beispielsweise gestohlenen Datenträgers ausführt, kann allerdings anhand einer Analyse von bestimmten Datenträgerparametern, beispielsweise anhand des Stromverbrauchs, erkennen, ob der Vergleich der beiden Berechnungsergebnisse Gleichheit ergibt öder nicht. Damit hat der Angreifer die Möglichkeit, den Datenträger durch Unterbrechung der Stromversorgung zu deaktivieren, bevor der Fehlbedienungszähler den Angriff vermerken kann. Auf diese Weise kann der Angreifer den Fehlbedienungszähler gleichsam außer Kraft setzen und den Angriff beliebig oft durchführen.

Aus diesem Grund ist dazu übergegangen worden, einen Fehlbedienungszähler bereits vor dem Ausführen des sicherheitsrelevanten Kommandos, ausgehend von einem vorgegebenen positiven Startwert, zu dekrementieren und lediglich dann zu inkrementieren, wenn das Kommando ohne Unterbrechung ausgeführt worden ist. Auf diese Weise kann ein vorstehend beschriebener Angriff von dem Fehlbedienungszähler sicher erkannt werden, da bei einer Unterbrechung der Stromversorgung noch während der Durchführung des Kommandos ein Inkrementieren des Zählers nicht mehr stattfindet. Beim nächsten Aufruf des Kommandos ist der Stand des Fehlbedienungszählers dementsprechend um eins verringert. Wenn vorgesehen wird, dass das Kommando in dem Datenträger lediglich dann ausgeführt wird, solange der Fehlbedienungszähler einen positiven Wert aufweist, ist die Anzahl der Angriffe auf das Kommando durch den Startwert des Fehlbedienungszählers beschränkt. Ein extensives Angreifen des Kommandos ist auf diese Weise sicher zu verhindern.

Aber auch diese Art des Fehlbedienungszählers hat Nachteile. Zum einen bedeuten das Dekrementieren des Fehlbedienungszählers vor der Ausführung jedes sicherheitsrelevanten Kommandos und das anschließende Inkrementieren einen Performanceverlust in all den Fällen, in denen kein Angriff stattfindet. Zum anderen können die wiederholt durchzuführenden Schreibzugriffe zum Dekrementieren und anschließenden Inkrementieren des Fehlbedienungszählers die Haltbarkeit entsprechender Speicherbereiche in dem Datenträger, beispielsweise gegeben durch EEPROM-Speicherzellen, beeinträchtigen.

DE 101 41 926 A1 offenbart ein Verfahren, das zur Verwaltung eines Datenspeichers vorgesehen ist, der Speicherseiten mit jeweils mehreren Speicherwörtem aufweist, wobei zum Schreiben eines Speicherworts ein Zugriff auf die gesamte Speicherseite erforderlich ist. Das Verfahren unterstützt Transaktionen mit atomaren Schreiboperationen, wobei Speicherabbilder in einem Rückführpuffer gespeichert werden, um bei einem Abbruch der Transaktion ein Rückführen des Speicherinhalts hinsichtlich der atomaren Schreiboperationen der Transaktion zu gestatten. Ferner unterstützt das Verfahren nicht-atomare Schreiboperationen während laufender Transaktionen. Zumindest dann, wenn ein Speicherabbild einer von der nicht-atomaren Schreiboperation betroffenen Speicherseite im Rückführpuffer vorliegt, wird auf Grundlage des vorliegenden Speicherabbilds ein entsprechend der nicht-atomaren Schreiboperation modifiziertes Speicherabbild erstellt, so daß bei einem Rückführen des Speicherinhalts die Auswirkungen erfolgreich abgeschlossener nicht-atomarer Schreiboperationen auf den Speicherinhalt erhalten bleiben. Ein Mikrocontroller und eine Chipkarte weisen entsprechende Merkmale auf. Durch die Erfindung wird eine Speicherverwaltung für einen nur seitenweise beschreibbaren Datenspeicher bereitgestellt, die neben atomaren auch nicht-atomare Schreiboperationen in Transaktionen unterstützt.

CA 2 247 475 A1 offenbart ein Verfahren um die Sicherheit eines Sicherheitsmoduls zu gewährleisten, wobei das Modul eingerichtet ist, um mit einem Rechner verbunden zu werden. Zweck des Verfahrens ist eine Gefährdung einer sicheren Operation durch eine Unterbrechung zu verhindern.

WO 2008/084016 A1 betrifft ein Verfahren und eine Schaltung zum Schutz von Daten gegen einen unbefugten Zugriff aufgrund von Unterbrechungen eines Betriebs, wobei nach jeder erfassten Unterbrechung ein Zähler inkrementiert oder dekrementiert wird, wobei der Zähler automatisch nach einer bestimmten Zeit neu gestartet wird.

Aufgabe der vorliegenden Erfindung ist es, ein Verfahren zum Sichern eines Datenträgers mittels eines Fehlbedienungszählers vorzuschlagen, welches Ressourcen sparend und Ressourcen schonend implementiert werden kann.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Bei einem erfindungsgemäßen Verfahren in einem portablen Datenträger zum Sichern des Datenträgers gegen externe Angriffe auf den Datenträger wird zumindest ein Zähler in dem Datenträger verwendet. Ein vorgegebenes Kommando wird dabei derart gesichert, dass es durch den Datenträger nur dann ausgeführt wird, wenn der zumindest eine Zähler in einem vorgegebenen, zulässigen Wertebereich liegt, insbesondere einen vorgegebenen Minimalwert nicht unterschreitet. Der zumindest eine Zähler wird erfindungsgemäß dann betätigt, in der Regel dekrementiert, wenn anhand eines Rollback-Zwischenspeichers des Datenträgers erkannt wird, dass eine vorhergehende Ausführung eines Kommandos gestört worden ist.

Das Betätigen des Zählers entspricht, wie erwähnt, beispielsweise einem Dekrementieren des Zählers. Im wiederholten Fehlerfall wird dann der zulässige Wertebereich nach unten verlassen, d.h. ein vorgegebener Minimalwert wird unterschritten. Es versteht sich von selbst, dass der Zähler analog zu der vorgenannten ersten Variante gemäß einer zweiten Variante auch derart eingerichtet sein kann, dass das vorgegebene Kommando nur dann ausgeführt wird, wenn der zumindest eine Zähler den vorgegebenen Wertebereich nicht nach oben verlässt, also einen vorgegebenen Maximalwert nicht überschreitet. Dabei wird der zumindest eine Zähler bei Erkennen einer Störung dann betätigt, indem er inkrementiert wird. Aus Gründen der Einfachheit und Verständlichkeit wird im Folgenden zumeist lediglich auf die erstgenannte der beiden Varianten Bezug genommen, welche funktional vollständig äquivalent zu der zweiten Variante ist.

Ein erfindungsgemäßer portabler Datenträger umfasst demnach zumindest einen Speicher und einen Prozessor, welcher eingerichtet ist, ein in dem Speicher gespeichertes Kommando auszuführen, sowie zumindest einen Zähler zum Sichern des Kommandos. Der Datenträger ist dabei eingerichtet, das vorgegebene Kommando nur dann auszuführen, wenn der zumindest eine Zähler in einem vorgegebenen Wertebereich liegt. Der Datenträger ist eingereichtet, anhand eines Rollback-Zwischenspeichers des Datenträgers zu erkennen, ob eine vorhergehende Ausführung eines Kommandos gestört worden ist. Weiterhin ist der Datenträger eingerichtet, den Zähler zu betätigen, wenn eine solche Störung erkannt worden ist.

Auf diese Weise kann eine Ressourcen sparende und Ressourcen schonende Sicherung des Datenträgers bzw. einzelner Kommandos gegen Fehlerangriffe erreicht werden. Nur im konkreten Fehlerfall, wenn also tatsächlich ein Angriff stattgefunden hat, wird der zumindest eine Zähler, welcher als Fehlbedienungszähler dient, betätigt. Schreibzugriffe erfolgen dagegen nicht bereits vor jeder Ausführung eines zu sichernden Kommandos - und zusätzlich nach dem Kommando, falls kein Angriff stattgefunden hat. Auf diese Weise können eine große Anzahl von Schreibzugriffen vermieden werden, wodurch die Performance des Datenträgers insgesamt beträchtlich gesteigert werden kann. Weiterhin werden die Ressourcen des Datenträgers, insbesondere entsprechende Speicherbereiche eines nichtflüchtigen Speichers, beispielsweise eines EEPROM-Speichers, dahingehend geschont, dass die Anzahl von Schreibzugriffen auf diese Speicherbereiche, welche den zumindest einen Zähler beinhalten, deutlich reduziert wird. Dadurch erhöht sich die Lebensdauer der entsprechenden Speicherbereiche und damit auch die Lebensdauer des Datenträgers.

Anhand des Rollback-Zwischenspeichers kann, wie nachstehend detailliert beschrieben, erkannt werden, ob eine vorhergehende Ausführung eines Kommandos gestört worden ist. Es ist möglich, dass der zumindest eine Zähler des Datenträgers eingerichtet ist, verschiedene Störungen des Datenträgers, d.h. unabhängig von dem speziellen Kommando, welches gestört worden ist, zu zählen. Weiterhin ist es möglich, dass der zumindest eine Zähler lediglich dann betätigt wird, wenn anhand eines Rollback-Zwischenspeichers des Datenträgers erkannt wird, dass eine vorhergehende Ausführung des konkreten, vorgegebenen Kommandos gestört worden ist. D.h. der Zähler ist gemäß dieser Ausführungsform eingerichtet, lediglich Störungen des vorgegebenen Kommandos zu zählen, um das vorgegebene Kommando zu sichern. In dem Datenträger können, wie nachstehend beschrieben, gleichzeitig verschiedene Zähler vorgesehen sein. Es kann Zähler geben, welche anhand des Rollback-Zwischenspeichers Störungen erkennen, welche einzelne, konkrete Kommandos betreffen, und solche Zähler, welche Störungen zählen, welche den Datenträger als solchen oder zumindest eine Mehrzahl von Kommandos betreffen.

Eine Störung einer vorhergehenden Ausführung eines Kommandos wird vorzugsweise dadurch erkannt, dass vor der aktuellen Ausführung des vorgegebenen Kommandos in dem Rollback-Zwischenspeicher ein gültiger Eintrag vorhanden ist. Die Bedeutung eines gültigen Eintrags wird nachstehend genauer beschrieben.

Der Rollback-Zwischenspeicher wird allgemein verwendet, um einen Speicherbereich des Datenträgers gegen Inkonsistenz aufgrund eines gestörten Schreibzugriffs auf den Speicherbereich zu sichern. Der Rollback-Zwischenspeicher kann Einträge zu einer Mehrzahl verschiedener Speicherbereiche umfassen. In erster Linie dient der Rollback-Zwischenspeicher somit in bekannter Weise dazu, die Integrität des Datenbestands des Datenträgers zu gewährleisten.

Wird ein Schreibzugriff auf einen Speicherbereich eines Speichers des Datenträgers gestört, bevor der Schreibzugriff erfolgreich abgeschlossen ist, können Datenverluste oder Inkonsistenzen bezüglich der zu schreibenden Daten bzw. der zuvor in dem Speicherbereich gespeicherten Daten entstehen. Um solches zu vermeiden, umfasst der Rollback-Zwischenspeicher, zumindest für die Dauer des Schreibzugriffs, den ursprünglichen Inhalt des Speicherbereichs vor Beginn des Schreibzugriffs. In der Regel umfasst der Eintrag weitere Informationen, beispielsweise die Größe des zwischengespeicherten Datums, die Adresse des Speicherbereichs, an dem das Datum im Speicher gespeichert ist und dergleichen. Der entsprechende Eintrag des Rollback-Zwischenspeichers wird dann als "gültig" markiert. Die Markierung "gültig" bedeutet, dass die aktuell in dem Eintrag zwischengespeicherten Daten im Fehlerfall in den entsprechend bezeichneten Speicherbereich zurück geschrieben werden müssen. Ist der Schreibzugriff auf den Speicher bzw. das Kommando, welches diesen Schreibzugriff umfasst, erfolgreich abgeschlossen worden, wird der den Schreibzugriff sichernde Eintrag in dem Rollback-Zwischenspeicher als "ungültig" markiert. Ein "ungültiger" Eintrag muss, falls eine dahingehende Prüfung des Rollback-Zwischenspeichers, z.B. beim Aktivieren des Datenträgers, erfolgt, nicht mehr in den Speicher zurück geschrieben werden, weil der entsprechende Schreibvorgang bereits vorher erfolgreich abgeschlossen worden ist.

Wenn nun während des Schreibzugriffs ein Fehler auftritt, beispielsweise eine Unterbrechung der Stromversorgung des Datenträgers, so kann bei erneutem Aktivieren des Datenträgers erkannt werden, dass in dem Rollback-Zwischenspeicher ein gültiger Eintrag vorliegt. Um die Integrität des Datenbestands des Datenträgers wieder herzustellen, wird nun der in dem Eintrag des Rollback-Zwischenspeichers gespeicherte Eintrag zuerst in den entsprechenden, in dem Eintrag bezeichneten Speicherbereich des Datenträgers zurück geschrieben. Dann wird der Eintrag des Rollback-Zwischenspeichers, analog zum Fall eines erfolgreichen Abschlusses des Schreibvorgangs, als ungültig - d.h. insbesondere auch wieder verwendbar für Zwischenspeicherzwecke - markiert.

Auf der anderen Seite kann nun anhand des Rollback-Zwischenspeichers, wie beschrieben, generell ein Fehlerangriff auf den Datenträger, beispielsweise in Form einer Unterbrechung der Stromversorgung, dadurch erkannt werden, dass in dem Rollback-Zwischenspeicher vor der Ausführung eines Kommandos ein gültiger Eintrag vorliegt. Dazu wird nach dem Aktivieren des Datenträgers, vor der Ausführung von Kommandos, der Status des Rollback-Zwischenspeichers geprüft. D.h. der Datenträger prüft, ob in dem Rollback-Zwischenspeicher gültige Einträge vorhanden sind. Dies bedeutet, dass ein vorhergehendes Kommando - genauer: ein Schreibzugriff eines vorhergehenden Kommandos - gestört worden ist, bevor das Kommando bzw. der Schreibzugriff vollständig und erfolgreich abgeschlossen werden konnte. Dieser gültige Eintrag des Rollback-Zwischenspeichers zeigt demnach insbesondere einen Angriff auf den Datenträger an. Dieser Angriff kann dann durch Betätigen des zumindest einen Zählers vermerkt werden. Die Ausführung des Kommandos wird dann in beschriebener Weise davon abhängig gemacht, ob der Zähler noch innerhalb des gültigen Wertebereichs liegt.

Wie erwähnt, kann der Rollback-Zwischenspeicher Einträge zu verschiedenen Speicherbereichen umfassen. Diese verschiedenen Speicherbereiche können ihrerseits verschiedenen Kommandos zugeordnet werden, z.B. derart, dass ein Schreibzugriff auf einen bestimmten Speicherbereich aus einem diesem Speicherbereich zugeordneten Kommando erfolgt. Der Rollback-Zwischenspeicher kann nun dahingehend geprüft werden, ob ein vorgegebener Eintrag als gültig markiert ist. Eine Gültigkeit dieses vorgegebenen Eintrags entspricht dann dem Fall, dass der gestörte Schreibzugriff während einer Ausführung des vorgegebenen Kommandos stattgefunden hat, welches dem Eintrag in der beschriebenen Weise zugeordnet wird. Der zumindest eine Zähler wird in diesem Fall also lediglich dann betätigt, wenn das entsprechende vorgegebene Kommando gestört worden ist.

Andererseits kann ein Zähler des Datenträgers, wie bereits vorstehend angedeutet, derart eingerichtet sein, dass er generell Störungen des Datenträgers zählt. Ein solcher Zähler wird betätigt, wenn irgendein Eintrag des Rollback-Zwischenspeichers nach dem Einschalten des Datenträgers als gültig erkannt wird, unabhängig davon, ob dieser Eintrag einem bestimmten Kommando zugeordnet ist, und falls ja, welches Kommando dies ist. Mischformen, d.h. Zähler, welche die Störung eines Kommandos aus einer vorgegebenen Menge von Kommandos zählen und dazu von einer entsprechenden Menge von Einträgen des Rollback-Zwischenspeichers abhängen, sind möglich.

Wie beschrieben, können anhand des Rollback-Zwischenspeichers lediglich Störungen der Ausführung solcher Kommandos erkannt werden, welche schreibend auf einen Speicher des Datenträgers zugreifen. Erfolgt hingegen während der Ausführung eines Kommandos kein Schreibzugriff, so ergeben sich dabei keine Änderungen des Rollback-Zwischenspeichers. Solche Kommandos können zusätzlich in bekannter Weise gesichert werden, indem der zumindest eine Zähler vor einer Ausführung des Kommandos dekrementiert wird und lediglich dann inkrementiert wird, wenn das Kommando ohne Unterbrechung ausgeführt worden ist. Auf diese Weise ist auch eine effektive Sicherung dieser Kommandos ohne Schreibzugriff gewährleistet. Da die meisten sicherheitsrelevanten Kommandos zumindest einen Schreibzugriff auf den Speicher des Datenträgers vorsehen - und demnach erfindungsgemäß gesichert werden können -, fällt diese bekannte Sicherung für solche Kommandos, die keine Schreibzugriffe umfassen, insgesamt kaum ins Gewicht und beeinträchtig die Ressourcen des Datenträgers allenfalls geringfügig.

Gemäß einer bevorzugten Ausführungsform wird der zumindest eine Zähler auch noch nach der Ausgabe des Datenträgers an einen Nutzer eingestellt. D.h. neben der erstmaligen Einstellung des Zählers bei der Herstellung des Datenträgers besteht die Möglichkeit der erneuten Einstellung des Zählers, wenn der Datenträger bereits in Betrieb genommen worden ist. Im Rahmen der vorliegenden Erfindung bezeichnet ein Einstellen des Zählers sowohl ein Einstellen eines Wertes des Zählers als auch ein Einstellen eines zulässigen Wertebereichs des Zählers sowie eines zulässigen Verlaufsmusters des Zählers.

Auf diese Weise ist es möglich, einer autorisierten Stelle jederzeit eine Einstellung des Zählers zu ermöglichen. Dies gilt insbesondere auch dann noch, wenn der Datenträger bereits in Benutzung ist. Es wird dadurch möglich, den Zähler einerseits zum Ausgabezeitpunkt mit einem recht niedrigen Startwert an den Nutzer auszugeben. Dadurch ist eine hohe Sicherheit des Datenträgers und der darauf ausführbaren Kommandos gewährleistet. Dies gilt insbesondere dann, wenn der Datenträger dem Nutzer abhanden kommen sollte, beispielsweise durch Diebstahl. Auf der anderen Seite wird es möglich, den Zähler nach einiger Zeit, wenn er aufgrund versehentlicher Fehlbedienung durch einen berechtigten Nutzer oder aufgrund technischer Pannen, ausgehend vom Startwert, bereits vermindert worden ist, mittels einer geeigneten Einstellung wieder anzuheben, beispielsweise auf den ursprünglichen Startwert. So kann eine nicht beabsichtigte Sperrung des Datenträgers verhindert werden. Dies ist dann sinnvoll, wenn sich die Anzahl der irrtümlichen, berechtigten Fehlbedienungen und technischen Defekte, welche zu einer Dekrementierung des Zählers geführt haben, im Laufe der Verwendung des Datenträgers zu einer Zahl aufsummiert haben, welche den Wert des Startwerts erreichen würde. Somit kann mittels der erfindungsgemäßen, mehrfachen Einstellung des Zählers die Sperrung des Datenträgers verhindert werden. Die Bedienbarkeit und Zuverlässigkeit der Verwendung des Datenträgers wird dadurch verbessert, ohne die Sicherheit einzuschränken.

Der Zähler kann zu jedem Zeitpunkt des Lebenszyklus des Datenträgers so niedrig gehalten werden, dass ein Angriff von nicht autorisierter Stelle auf ein vorgegebenes Kommando nur in äußerst begrenztem Umfang möglich ist. Gleichzeitig kann es vermieden werden, dass der Datenträger durch gelegentliche, irrtümliche oder technisch bedingte Fehlbedienung gesperrt wird. Ein Zähler, der aus solchen Gründen dekrementiert wird, kann neu und geeignet auch noch nach der Herstellung des Datenträgers eingestellt werden, d.h. auch wenn der Datenträger bereits an den Nutzer ausgegeben worden ist und gegebenenfalls seit einiger Zeit in Betrieb ist.

Als autorisierte Stellen, welche zu einer Einstellung des Zählers berechtigt sind, kommen mehrere Instanzen in Frage. Eine solche Einstellung kann beispielsweise dem Nutzer des Datenträgers erlaubt sein. Auch eine den Datenträger ausgebende Stelle kann eine Einstellung des Zählers vornehmen. Schließlich kann diese Einstellung ebenfalls durch den Datenträger selbst vorgenommen werden. Weiterhin können die Voraussetzungen, welche erfüllt sein müssen, damit die betreffende Instanz eine Einstellung vornehmen kann, variieren. In der Regel ist eine Einstellung des zumindest einen Zählers nur nach erfolgreicher Authentisierung gegenüber dem Datenträger möglich. Schließlich kann der Wert, auf den der Zähler bei der Einstellung eingestellt wird bzw. der zulässige Wertebereich oder der zulässige Verlauf des Zählers, einerseits frei vorgegeben werden. Andererseits können die neu eingestellten Werte des Zählers von externen Vorgaben oder einem vorhergegangenen Verlauf des Zählerstandes abhängen.

Gemäß einem weiteren Aspekt, welcher nicht auf die Ausführungsform des Verfahrens mit einstellbarem Zähler beschränkt ist, ist in dem Datenträger, wie erwähnt, eine Mehrzahl von Zählern vorgesehen. Dabei wird ein erster Zähler zum Sichern eines ersten Kommandos verwendet und ein zweiter, von dem ersten Zähler verschiedener Zähler wird zum Sichern eines zweiten, in der Regel von dem ersten Kommando verschiedenen zweiten Kommandos, verwendet. Die Anzahl der Zähler kann variieren. Es ist weiterhin möglich, dass mittels eines Zählers eine Mehrzahl von Kommandos gesichert wird. Jeder der Zähler ist - falls einstellbar - wie vorstehend beschrieben, separat einstellbar. Auf diese Weise können verschiedene Kommandos in angemessener Weise verschieden gesichert werden.

Für den Fall, dass der zumindest eine Zähler den vorgegebenen Wertebereich verlässt, wird der Datenträger oder zumindest ein Kommando, welches von dem zumindest einen Zähler gesichert wird, deaktiviert. Es sind dann keine weiteren Angriffe auf den Datenträger bzw. das Kommando möglich. Sensible Daten können nicht in unberechtigte Hände geraten. Da ein irrtümliches Deaktivieren des Datenträgers oder Kommandos dadurch nahezu ausgeschlossen ist, dass der Zähler, um gelegentliche Fehlbedienungen oder technische Schwierigkeiten auszugleichen, nach Bedarf neu und geeignet eingestellt wird, kann bei einer Deaktivierung des Datenträgers mit sehr großer Wahrscheinlichkeit von einem Angriff auf den Datenträger ausgegangen werden.

Im Folgenden wird die vorliegende Erfindung mit Bezug auf die beiliegenden Zeichnungen beispielhaft erläutert. Darin zeigen:

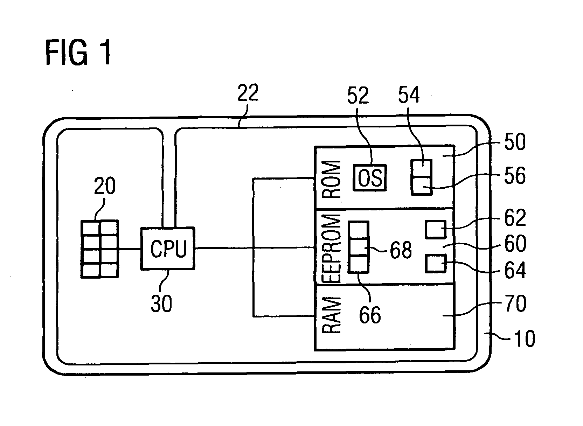

- Figur 1: eine bevorzugte Ausführungsform eines erfindungsgemäßen Datenträgers und
- Figur 2: Schritte einer bevorzugten Ausführungsform des erfindungsgemäßen Verfahrens.

Ein portabler Datenträger 10, welcher hier als Chipkarte dargestellt ist, umfasst zwei verschiedene Datenkommunikationsschnittstellen 20, 22. Die erste Datenkommunikationsschnittstelle 20 ist als Kontaktfeld ausgebildet. Mittels dieser kann der Datenträger 10 über ein kontaktbehaftet arbeitendes Lesegerät, beispielsweise ein gewöhnliches Chipkartenterminal, kontaktiert werden. Die zweite Datenkommunikationsschnittstelle 22 dient der kontaktlosen Datenkommunikation und ist als Antennenspule ausgebildet. Die Versorgung des Datenträgers 10 mit Energie erfolgt in der jeweiligen Betriebsart, kontaktbehaftet oder kontaktlos, jeweils in bekannter Weise über die jeweilige Datenkommunikationsschnittstelle 20, 22. Es ist möglich, dass der Datenträger 10 zusätzlich eine eigene Energieversorgung umfasst, beispielsweise im Form einer Batterie (nicht gezeigt). Alternativ kann der Datenträger 10 auch nur für eine Betriebsart, kontaktbehaftet oder kontaktlos, eingerichtet sein.

Weiterhin umfasst der Datenträger 10 einen Prozessor (CPU 30) und eine Reihe von Speichern 50, 60, 70.

Ein nicht wiederbeschreibbarer, nichtflüchtiger ROM-Speicher 50 umfasst ein den Datenträger 10 steuerndes Betriebssystem (OS) 52, sowie Applikationen 54,56, welche eingerichtet sind, die Ausführung sicherheitsrelevanter Kommandos auf dem Datenträger 10 zu unterstützen, beispielsweise bei einer Authentisierung, bei der Berechnung einer kryptographischen Funktion oder dergleichen. Das Betriebssystem 52, oder zumindest Teile davon, sowie die Applikationen 54, 56 können alternativ auch in dem wiederbeschreibbaren, nichtflüchtigen EEPROM-Speicher 60 gespeichert sein. Darin können weitere Applikationen, beispielsweise verschiedene Nutzeranwendungen, sowie Zähler 62, 64 zum Sichern der sicherheitsrelevanten Kommandos 54, 56 gespeichert. In dem Speicher 60 ist weiterhin ein Rollback-Zwischenspeicher 66 vorgesehen.

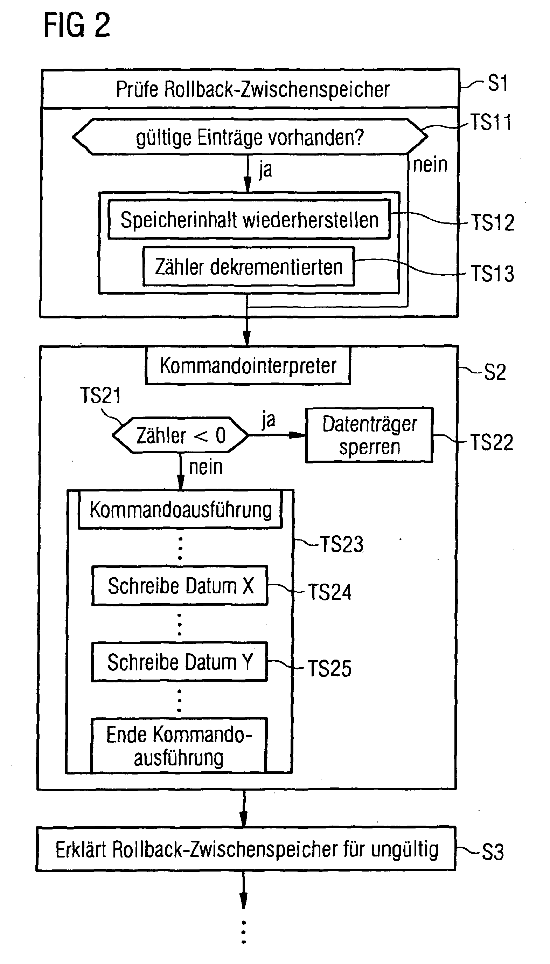

Die Funktion der Zähler 62, 64 sowie des Rollback-Zwischenspeichers 66 wird nachstehend und mit Bezug auf Fig. 2 genauer beschrieben.

Der Rollback-Zwischenspeicher 66 dient in bekannter Weise zum Sichern der Integrität des Datenbestandes des Datenträgers 10. Um einen Schreibzugriff auf eine Adresse in dem Speicher 60 zu sichern, werden diejenigen Daten, welche in dem zu beschreibenden Speicherbereich vor dem Schreibzugriff gespeichert sind, in einen Eintrag 68 des Rollback-Zwischenspeichers 66 zwischengespeichert. Dann erfolgt der Schreibzugriff auf den Speicherbereich des Speichers 60. Ist dieser erfolgreich, d.h. insbesondere ohne Störung oder Unterbrechung, abgeschlossen worden, ist der Eintrag 68 in dem Rollback-Zwischenspeicher 66 wieder verzichtbar. Wenn allerdings der Schreibzugriff gestört worden ist, beispielsweise durch eine Unterbrechung der Stromversorgung des Datenträgers 10, könnte der Datenbestand des Datenträgers 10 dadurch inkonsistent werden, dass beispielsweise Anteile der zu schreibenden Daten bereits in den Speicherbereich geschrieben worden sind, während noch Anteile der dort vormals gespeicherten Daten in den noch nicht beschriebenen Teilbereichen verbleiben. Um eine derartige Inkonsistenz zu beheben, wird der Eintrag 68 in dem Rollback-Zwischenspeicher 66, welcher den Datensatz hält, der vor dem gestörten Schreibzugriff in dem Speicherbereich gespeichert war, dorthin zurück geschrieben. Dies kann beispielsweise unmittelbar nach einen erneuten Start des Datenträgers 10 geschehen.

In der Regel ist der Rollback-Zwischenspeicher 66, wie erwähnt, in dem nicht flüchtigen Speicher 60 angesiedelt und umfasst verschiedene Einträge 68. Jeder der Einträge 68 umfasst dabei beispielsweise ein Status-Byte, ein Adressfeld, ein Größenfeld, ein Datenfeld und ein Prüffeld. Das Statusfeld zeigt an, ob der Eintrag aktuell "gültig" oder "ungültig" ist. Ein "gültiger" Eintrag umfasst zu sichernde Daten, welche Gegenstand eines Schreibzugriffs auf den Speicher 60 des Datenträgers 10 sind, wobei der Schreibzugriff noch nicht vollständig erfolgreich abgeschlossen worden ist. Nach dem Aktivieren des Datenträgers kann anhand eines "gültigen" Eintrags erkannt werden, dass vorhergehend ein Schreibzugriff gestört worden ist und der entsprechende Datensatz in dem Eintrag noch in den Speicher zurück zu schreiben ist. Ein "ungültiger" Eintrag hingegen umfasst keine relevanten Daten, ist somit als Zwischenspeicher verwendbar. Das Adressfeld dient dazu, eine Adresse mit Bezug auf den Speicher 60 aufzunehmen, an welcher der Datensatz, der zu Sicherungszwecken in dem Datenfeld des Eintrag 68 gespeichert werden kann, gespeichert ist. Die Größe des Datenfeldes wird durch das Größenfeld des Eintrags 68 angegeben. Das Prüffeld schließlich kann eine Prüfsumme umfassen, mittels derer der Inhalt der vorstehend beschriebenen Felder nochmals gesichert wird. Der Rollback-Zwischenspeicher 66 kann dabei, neben den Einträgen 68, selbst ein Statusfeld umfassen, welches beispielsweise angibt, ob gültige Einträge vorliegen oder ob der Speicher aktuell keine Zwischenspeicherkapazitäten mehr aufweist.

Mit Bezug auf Fig. 2 werden im Folgenden Schritte einer bevorzugten Ausführungsform eines Verfahrens zum Sichern eines Kommandos gegen Fehlerangriffe beschrieben.

Nachdem der Datenträger 10 in bekannter Weise, beispielsweise durch die Kommandofolge "ICC_ON/RESET -> startup() -> main() -> Send ATR", aktiviert und in Betrieb gesetzt worden ist, prüft der Datenträger 10 in einem Schritt S1 den Rollback-Zwischenspeicher 66.

Dabei wird in Teilschritt TS11 zuerst geprüft, ob in dem Rollback-Zwischenspeicher 66 gültige Einträge 68 vorhanden sind. Diese Prüfung kann einerseits das Statusfeld des Rollback-Zwischenspeichers 66, andererseits die Statusfelder der einzelnen Einträge 68 betreffen. Wird in Teilschritt TS11 ein gültiger Eintrag 68 erkannt, wird der Inhalt des entsprechenden Speicherbereichs des Speichers 60 in Teilschritt TS12 in vorstehend beschriebener Weise wieder hergestellt, beispielsweise mittel einer Funktion "v_RestoreRollbackBuffer()". In einem weiteren Teilschritt TS13 wird zumindest einer der Zähler 62, 64 dekrementiert.

Das Vorliegen eines gültigen Eintrags 68 in dem Rollback-Zwischenspeicher 66 bedeutet, dass eine vorhergehende Ausführung eines Kommandos des Datenträgers 10 gestört oder unterbrochen worden ist. Genauer bedeutet dies, dass ein Schreibzugriff auf den Speicher 60 des Datenträgers 10, welcher innerhalb eines Kommandos durchgeführt werden sollte, gestört oder unterbrochen worden ist.

Als Ursache einer solchen Störung kommt ein Angriff auf den Datenträger 10 oder ein bestimmtes Kommando des Datenträgers 10 in Frage, beispielsweise eine gezielte Unterbrechung der Stromversorgung des Datenträgers 10. Die Zähler 62, 64 sind eingerichtet, solche Angriffe zu zählen. Ein Kommando des Datenträgers 10 wird lediglich dann ausgeführt, wenn der dem Kommando zugeordnete Zähler 62, 64 innerhalb eines vorgegebenen Wertebereichs liegt, beispielsweise nicht negativ ist. Damit wird es einem Angreifer unmöglich gemacht, ein Kommando zu oft anzugreifen. Jedes Mal, wenn ein Angriff auf das Kommando erkannt wird, wird der dem Kommando zugeordnete Zähler 62, 64 entsprechend, wie beschrieben, dekrementiert.

Die Gültigkeit eines Eintrags 68 des Rollback-Zwischenspeichers 66 kann dabei beispielsweise bedeuten, dass ein Schreibzugriff eines bestimmten Kommandos, welches diesem Eintrag zugeordnet ist, gestört worden ist. Diese Zuordnung kann dadurch erfolgen, dass das entsprechende Kommando einen Schreibzugriff umfasst, welcher stets auf eine vorgegebene Adresse in dem Speicher 60 erfolgt. Diese Adresse ist dann in dem Adressfeld des Eintrags 68 gespeichert. Entsprechend würde dann genau der Zähler 62, 64, der diesem Kommando zugeordnet ist, in TS13 dekrementiert werden.

Auf der anderen Seite kann der Datenträger 10 beispielsweise einen Zähler 62, 64 umfassen, der sämtliche Angriffe auf den Datenträger 10 registrieren soll. Ein solcher Zähler wird in TS13 stets dekrementiert, unabhängig davon, welcher der Einträge 68 des Datenträgers 10 als "gültig" markiert ist. Das Vorliegen eines Angriffs auf den Datenträger 10 lässt sich auch bereits an einem "gültigen" Statuseintrag des Rollback-Zwischenspeichers 66 erkennen.

Nachdem die Prüfung des Rollback-Zwischenspeichers 66 in Schritt S1 abgeschlossen ist, wird ein empfangenes Kommando an den Kommandointerpreter übergeben und dort in Schritt S2 ausgeführt.

Dabei wird, wie vorstehend bereits beschrieben, in einem ersten Teilsschritt TS21 überprüft, ob der dem Kommando zugeordnete Zähler 62, 64 in einem zulässigen Wertebereich liegt, hier beispielsweise nicht negativ ist.

Ist der Zähler 62, 64 negativ, bedeutet dies, dass die zulässige Anzahl von Angriffen bzw. gestörten Ausführungen des Kommandos bereits überschritten ist. In Teilschritt TS22 wird daher zum Schutz sicherheitsrelevanter Daten auf dem Datenträger 10 derselbe gesperrt. Weitere Angriffe auf den Datenträger 10 mit der Gefahr, dass sensible Daten erspäht werden können, sind damit nicht mehr möglich. Es ist alternativ auch möglich, dass an Stelle des Datenträgers 10 lediglich das entsprechende Kommando gesperrt wird, der Datenträger 10 ansonsten aber noch betriebsbereit bleibt.

Liegt der Zähler 62, 64 hingegen noch im vorgegebenen Wertebereich, so wird das Kommando in Teilschritt TS23 ausgeführt. Dabei können verschiedene Schreibzugriffe auf den Speicher 60 des Datenträgers 10 erfolgen, beispielsweise in Teilschritt TS24 mit Bezug auf das Datum X oder in Teilschritt TS25 mit Bezug auf das Datum Y. Diese Schreibzugriffe werden, wie vorstehend beschrieben, mittels des Rollback-Zwischenspeichers 66 gesichert. D.h. jeder dieser Schreibzugriffe erzeugt temporär einen gültigen Eintrag 68 in dem Rollback-Zwischenspeicher 66.

Nach erfolgreichem Abschluss des Kommandos wird in Schritt S3 der Rollback-Zwischenspeicher 66 wieder für ungültig erklärt, d.h. die entsprechenden Statusfelder der Einträge 68, welche zwischenzeitlich als "gültig" markiert worden sind, werden wieder als "ungültig" markiert. Dies kann beispielsweise mittels eines Kommandos "Invalidate_RollbackBuffer" erfolgen.

Ein solches ungültig Erklären von Einträgen 68 des Rollback-Zwischenspeichers 66 kann sämtliche aktuell gültigen Einträge 68 betreffen, also global auf den gesamten Rollback-Zwischenspeicher 66 angewendet werden. Es kann jedoch auch sinnvoll sein, einzelne "gültige" Einträge individuell unmittelbar dann wieder als "ungültig" zu markieren, sobald der entsprechende gesicherte Schreibzugriff erfolgreich abgeschlossen worden ist. Ein solches ungültig Erklären kann auch bereits während einer Kommandoausführung TS23 stattfinden. Dies gilt insbesondere mit Bezug auf einen Schreibzugriff, welche ein besonderes Datenobjekt betrifft. Ein solches Datenobjekt, beispielsweise ein so genannter "Application Transaction Counter", ATC, oder ein "PIN Try Counter", PTC, muss unmittelbar nach einem erfolgreichen Schreiben in das Dateisystem des Datenträgers verbindlich gesetzt werden. D.h. bereits im weiteren Verlauf der noch laufenden Kommandoausführung gilt bereits der neu geschriebene Wert des Datenobjekts.

In jedem Fall wird ein Angriff auf ein Kommando erkannt, welcher erfolgt, solange der Schreibzugriff noch nicht vollständig abgeschlossen worden ist. Die Datenintegrität ist somit gewährleistet und die Anzahl der Angriffe kann mittels der entsprechenden Zähler 62, 64 klein gehalten werden. Sicherheitsrelevante Daten in dem Datenträger 10 sind demnach sowohl gegen Ausspähen als auch gegen Zerstörung in dem Datenträger 10 wirksam geschützt.

Gelegentlich kann es vorkommen, dass eine Kommandoausführung nicht aufgrund eines Angriffs, sondern augrund eines gewöhnlichen technischen Fehlers unterbrochen worden ist, beispielsweise dadurch, dass der Datenträger 10 in kontaktloser Betriebsweise zu weit von dem Lesegerät entfernt worden ist. Andere Störungen sind möglich.

Um eine unbeabsichtigte Sperrung des Datenträgers 10 zu verhindern, die darauf beruht, dass derartige Störungen von dem Datenträger 10 in der beschriebenen Weise als Angriffe interpretiert werden - mit entsprechender Dekrementierung betroffener Zähler -, wäre es möglich, den Startwert des Zählers 62, 64, von dem ausgehend in TS13 dekrementiert wird, bei der Herstellung des Datenträgers 10 entsprechend hoch einzustellen. Dies würde allerdings einem Angreifer die Möglichkeit geben, entsprechend viele Angriffe auf den Datenträger 10 starten zu können, bevor der Datenträger 10 deaktiviert wird. Mit jedem Angriff steigt aber die Wahrscheinlichkeit, dass sensible Daten den Datenträger 10 verlassen. Wird der Startwert bei der Herstellung des Datenträgers sehr niedrig eingestellt, ist dieser zwar gegen Angriffe von außen recht gut geschützt. Allerdings kann eine entsprechend kleine Anzahl von unbeabsichtigten Fehlbedienungen oder technischen Defekten eine unbeabsichtigte Abschaltung des Datenträgers 10 zur Folge haben.

Deswegen ist der Datenträger 10 zusätzlich derart eingerichtet, dass die Zähler 62, 64 mehrfach, auch noch nach der Ausgabe des Datenträgers 10 an einen Nutzer, neu eingestellt werden können. Dies gilt sowohl für den Wert der Zähler 62, 64 selbst als auch für die Wertebereiche, innerhalb derer sich die Zähler 62, 64 während vorgegebener oder bei der Einstellung der Zähler 62, 64 ebenfalls definierbarer Zeitspannen bewegen dürfen. Die Berechtigung zur Einstellung der Zähler 62, 64 kann sowohl einem Nutzer als auch einer den Datenträger 10 ausgebenden Stelle gewährt werden. Dazu ist in der Regel jeweils eine Authentisierung gegenüber dem Datenträger 10 erforderlich. Schließlich kann die Einstellung auch durch den Datenträger 10 selbst erfolgen, beispielsweise abhängig von einem Verlauf der Zähler 62, 64 in der Vergangenheit. Es ist weiterhin möglich, dass verschiedene der genannten Bedingungen gleichzeitig vorliegen müssen, damit eine Einstellung der Zähler 62, 64 erfolgen kann.

Die verschiedenen Zähler 62, 64 sind jeweils separat einstellbar. Eine Einstellung des einen Zählers 62, 64 ist unabhängig von der Einstellung des anderen Zählers 64, 62. Damit können verschiedene Kommandos spezifisch gesichert werden. Wenn beispielsweise der Zähler 62 ein Kommando sichert, welches im kontaktlosen Betriebsmodus ausgeführt wird, ist es sinnvoll, diesen Zähler 62 bezüglich des Startwertes höher einzustellen als den Zähler 64, welcher ein entsprechenden Kommando sichert, welches im kontaktbehafteten Betriebsmodus ausgeführt wird. Unbeabsichtigte Unterbrechungen der Stromversorgung sind im Zusammenhang des kontaktlosen Betriebsmodus öfter zu erwarten als im kontaktbehafteten Betriebsmodus.

Ein Nutzer des Datenträgers 10 kann eine Einstellung der Zähler 62, 64 durchführen, wenn er sich erfolgreich gegenüber dem Datenträger 10 authentisiert. Dies kann beispielsweise durch Eingabe eines Geheimdatums, beispielsweise einer PIN, erfolgen. Zur Eingabe eines solchen Geheimdatums kann der Datenträger 10 eine Eingabeeinrichtung (nicht gezeigt), beispielsweise eine Tastatur, aufweisen. Es ist auch möglich, dass zur Eingabe solcher Daten in den Datenträger 10 derselbe mit einem geeigneten Lesegerät mit Eingabeeinrichtung, beispielsweise einem Chipkartenterminal, über eine der Schnittstellen 20, 22 verbunden wird. Es ist möglich, dass der Nutzer dann die Einstellungen bezüglich des Zählers 62, 64 selbst vornehmen kann. Alternativ kann auch der Datenträger 10 die Einstellung der Zähler 62, 64 auf intern vorgegebene Werte zurücksetzen, sobald eine erfolgreiche Authentisierung des Nutzers vorliegt.

Die Einstellung der Zähler 62, 64 kann auch von einer den Datenträger 10 ausgebenden Stelle, beispielsweise einer Bank, durchgeführt werden. Dazu muss der Datenträger 10 mit dieser Stelle verbunden werden. Dies kann beispielsweise über ein geeignetes Lesegerät geschehen, welches seinerseits, beispielsweise über das Internet, mit der ausgebenden Stelle verbunden ist. Um eine Berechtigung zur Einstellung der Zähler 62, 64 zu erhalten, muss sich die ausgebende Stelle in bekannter Weise gegenüber dem Datenträger 10 authentisieren. Danach ist eine Einstellung der Zähler 62, 64 gemäß den Vorgaben der ausgebenden Stelle möglich. Auch in diesem Fall kann die Einstellung des Zählers, nach erfolgreicher Authentisierung der ausgebenden Stelle, durch den Datenträger 10 selbst vorgenommen werden. Der Datenträger 10 kann dies beispielsweise jeweils nach Ablauf eines vorgegebenen Zeitintervalls vorsehen. Den Ablauf des Zeitintervalls kann der Datenträger 10 einer internen Zeitmesseinrichtung oder einem von der ausgebenden Stelle erhaltenen, zertifizierten Zeitstempel entnehmen.

## Patentansprüche

1. Verfahren in einem portablen Datenträger (10), wobei ein vorgegebenes Kommando (54; 56) durch den Datenträger (10) nur dann ausgeführt wird, wenn zumindest ein Zähler (62; 64) des Datenträgers in einem vorgegebenen Wertebereich liegt (S2), **dadurch gekennzeichnet, dass** der zumindest eine Zähler (54; 56) betätigt wird (TS13), wenn anhand eines Rollback-Zwischenspeichers (66) des Datenträgers (10) erkannt wird (TS11), dass eine vorhergehende Ausführung eines Kommandos (54; 56) gestört worden ist.

2. Verfahren nach Anspruch 1, **dadurch gekennzeichnet, dass** der zumindest eine Zähler (54; 56) betätigt wird, wenn anhand des Rollback-Zwischenspeichers (66) des Datenträgers (10) erkannt wird, dass eine vorhergehende Ausführung des vorgegebenen Kommandos gestört worden ist.

3. Verfahren nach Anspruch 1 oder 2, **dadurch gekennzeichnet, dass** eine Störung einer vorhergehenden Ausführung eines Kommandos (54; 56) dadurch erkannt wird, dass vor der aktuellen Ausführung des vorgegebenen Kommandos (54; 56) in dem Rollback-Zwischenspeicher (66) ein gültiger Eintrag (68) vorhanden ist.

4. Verfahren nach einem der Ansprüche 1 bis 3, **dadurch gekennzeichnet, dass** der Rollback-Zwischenspeicher (66) verwendet wird, um einen Speicherbereich des Datenträgers (10) gegen Inkonsistenz aufgrund eines gestörten Schreibzugriffs auf den Speicherbereich zu sichern.

5. Verfahren nach Anspruch 4, **dadurch gekennzeichnet, dass** der Schreibzugriff während einer Ausführung des vorgegebenen Kommandos (54; 56) stattfindet.

6. Verfahren nach einem der Ansprüche 1 bis 5, **dadurch gekennzeichnet, dass** der zumindest eine Zähler (62; 64) nach einer Ausgabe des Datenträgers (10) an einen Nutzer eingestellt wird.

7. Verfahren nach Anspruch 6, **dadurch gekennzeichnet, dass** der zumindest eine Zähler (62; 64) nach einer erfolgreichen Authentisierung gegenüber dem Datenträger (10) eingestellt wird.'

8. Verfahren nach einem der Ansprüche 1 bis 7, **dadurch gekennzeichnet, dass** mehr als ein Zähler (62; 64) vorgesehen ist, wobei ein erster Zähler (62) zum Sichern eines ersten Kommandos (54) verwendet wird und ein zweiter Zähler (64) zum Sichern eines zweiten Kommandos (56) verwendet wird.

9. Verfahren nach einem der Ansprüche 1 bis 8, **dadurch gekennzeichnet, dass** der zumindest eine Zähler (62; 64) zum Sichern einer Mehrzahl von Kommandos (54; 56) verwendet wird.

10. Verfahren nach einen der Ansprüche 1 bis 9, **dadurch gekennzeichnet, dass** der Datenträger (10) oder zumindest ein Kommando (54; 56), welches von dem zumindest einen Zähler (62; 64) gesichert wird, deaktiviert wird (TS22), wenn der zumindest eine Zähler (62; 64) den vorgegebenen Wertebereich verlässt.

11. Portabler Datenträger (10), umfassend zumindest einen Speicher (50; 60; 70) und einen Prozessor (30), welcher eingerichtet ist, ein in dem Speicher (50; 60; 70) gespeichertes Kommando (54; 56) auszuführen, sowie zumindest einen Zähler (62; 64) zum Sichern des Kommandos (54; 56), wobei der Datenträger (10) eingerichtet ist, das Kommando (54; 56) nur dann auszuführen, wenn der zumindest eine Zähler (62; 64) in einem vorgegebenen Wertebereich liegt, **dadurch gekennzeichnet, dass** der Datenträger (10) eingereichtet ist, anhand eines Rollback-Zwischenspeichers (66) des Datenträgers (10) zu erkennen, ob eine vorhergehende Ausführung eines Kommandos (54; 56) gestört worden ist, und weiter eingerichtet ist, den Zähler (62; 64) zu betätigen, wenn eine solche Störung erkannt worden ist.

12. Datenträger nach Anspruch 13, **dadurch gekennzeichnet, dass** der zumindest eine Zähler (62; 64) eingerichtet ist, nach einer Ausgabe des Datenträgers (10) an einen Nutzer einstellbar zu sein.

13. Datenträger (10) nach Anspruch 11 oder 12, **dadurch gekennzeichnet, dass** der Datenträger (10) eingerichtet ist, ein Verfahren nach einem der Ansprüche 1 bis 10 durchzuführen.

## Claims

1. A method in a portable data carrier (10) wherein a specified command (54; 56) is executed by the data carrier (10) only when at least one counter (62; 64) of the data carrier lies in a specified values range (S2), **characterized in that** the at least one counter (62; 64) is actuated (TS13) when it is recognized (TS11) on the basis of a rollback buffer (66) of the data carrier (10) that a preceding execution of a command (54; 56) has been disturbed.

2. The method according to claim 1, **characterized in that** the at least one counter (62; 64) is actuated when it is recognized on the basis of the rollback buffer (66) of the data carrier (10) that a preceding execution of the specified command has been disturbed.

3. The method according to claim 1 or 2, **characterized in that** a disturbance of a preceding execution of a command (54; 56) is recognized by a valid entry (68) being present in the rollback buffer (66) before the current execution of the specified command (54; 56).

4. The method according to any of claims 1 to 3, **characterized in that** the rollback buffer (66) is employed to secure a memory area of the data carrier (10) against inconsistency due to a disturbed write access to the memory area.

5. The method according to claim 4, **characterized in that** the write access takes place during an execution of the specified command (54; 56).

6. The method according to any of claims 1 to 5, **characterized in that** the at least one counter (62; 64) is set after an issuance of the data carrier (10) to a user.

7. The method according to claim 6, **characterized in that** the at least one counter (62; 64) is set after a successful authentication to the data carrier (10).

8. The method according to any of claims 1 to 7, **characterized in that** more than one counter (62; 64) is provided, a first counter (62) being employed for securing a first command (54) and a second counter (64) being employed for securing a second command (56).

9. The method according to any of claims 1 to 8, **characterized in, that** the at least one counter (62; 64) is employed for securing a plurality of commands (54; 56).

10. The method according to any of claims 1 to 9, **characterized in that** the data carrier (10) or at least a command (54; 56) that is secured by the at least one counter (62; 64) is deactivated (TS22) when the at least one counter (62; 64) leaves the specified values range.

11. A portable data carrier (10) comprising at least one memory (50; 60; 70) and a processor (30) which is configured to execute a command (54; 56) stored in the memory (50; 60; 70), as well as at least one counter (62; 64) for securing the command (54; 56), the data carrier (10) being configured to execute the command (54; 56) only when the at least one counter (62; 64) lies in a specified values range, **characterized in that** the data carrier (10) is configured to recognize on the basis of a rollback buffer (66) of the data carrier (10) whether a preceding execution of a command (54; 56) has been disturbed, and is further configured to actuate the counter (62; 64) when such a disturbance has been recognized.

12. The data carrier according to claim 13, **characterized in that** the at least one counter (62; 64) is configured to be settable after an issuance of the data carrier (10) to a user.

13. The data carrier (10) according to claim 11 or 12, **characterized in that** the data carrier (10) is configured to carry out a method according to any of claims 1 to 10.

## Revendications

1. Procédé dans un support de données (10) portable, un ordre (54; 56) prédéterminé n'étant exécuté par le support de données (10) que si au moins un compteur (62; 64) du support de données se situe (S2) dans une plage de valeurs prédéterminée, **caractérisé en ce que** le au moins un compteur (54; 56) est activé (TS13) quand, à l'aide d'une mémoire intermédiaire de rétablissement (66) du support de données (10), il est décelé (TS11) qu'une exécution précédente d'un ordre (54; 56) a été perturbée.

2. Procédé selon la revendication 1, **caractérisé en ce que** le au moins un compteur (54; 56) est activé quand, à l'aide de la mémoire intermédiaire de rétablissement (66) du support de données (10), il est décelé qu'une exécution précédente de l'ordre prédéterminé a été perturbée.

3. Procédé selon la revendication 1 ou 2, **caractérisé en ce qu'**une perturbation d'une exécution précédente d'un ordre (54; 56) est décelée par le fait que, avant l'exécution actuelle de l'ordre (54; 56) prédéterminé, il y a une entrée valable (68) dans la mémoire intermédiaire de rétablissement (66).

4. Procédé selon une des revendications de 1 à 3, **caractérisé en ce que** la mémoire intermédiaire de rétablissement (66) est utilisée pour protéger une zone de mémoire du support de données (10) contre l'incohérence engendrée par un accès en écriture à la zone de mémoire perturbé.

5. Procédé selon la revendication 4, **caractérisé en ce que** l'accès en écriture a lieu pendant une exécution de l'ordre (54; 56) prédéterminé.

6. Procédé selon une des revendications de 1 à 5, **caractérisé en ce que** le au moins un compteur (62; 64) est réglé après une délivrance du support de données (10) à un utilisateur.

7. Procédé selon la revendication 6, **caractérisé en ce que** le au moins un compteur (62; 64) est réglé après une authentification aboutie vis-à-vis du support de données (10).

8. Procédé selon une des revendications de 1 à 7, **caractérisé en ce qu'**il est prévu plus d'un compteur (62; 64), un premier compteur (62) étant utilisé pour protéger un premier ordre (54), et un deuxième compteur (64) étant utilisé pour protéger un deuxième ordre (56).

9. Procédé selon une des revendications de 1 à 8, **caractérisé en ce que** le au moins un compteur (62; 64) est utilisé pour protéger une pluralité d'ordres (54; 56).

10. Procédé selon une des revendications de 1 à 9, **caractérisé en ce que** le support de données (10) ou au moins un ordre (54; 56) protégé par le au moins un compteur (62; 64) est désactivé (TS22) si le au moins un compteur (62; 64) quitte la plage de valeurs prédéterminée.

11. Support de données (10) portable, comprenant au moins une mémoire (50; 60; 70) et un processeur (30) configuré pour exécuter un ordre (54; 56) mémorisé dans la mémoire (50; 60; 70), ainsi qu'au moins un compteur (62; 64) destiné à protéger l'ordre (54; 56), le support de données (10) étant configuré pour n'exécuter l'ordre (54; 56) que si le au moins un compteur (62; 64) se situe dans une plage de valeurs prédéterminée, **caractérisé en ce que** le support de données (10) est configuré pour, à l'aide d'une mémoire intermédiaire de rétablissement (66) du support de données (10), déceler si une exécution précédente d'un ordre (54; 56) a été perturbée, et est en outre configuré pour activer le compteur (62; 64) si une telle perturbation a été décelée.

12. Support de données selon la revendication 13, **caractérisé en ce que** le au moins un compteur (62; 64) est configuré pour être réglable après une délivrance du support de données (10) à un utilisateur.

13. Support de données selon la revendication 11 ou 12, **caractérisé en ce que** le support de données (10) est configuré pour exécuter un procédé selon une des revendications de 1 à 10.
